# EUROPEAN PATENT APPLICATION

(11) **EP 0 621 329 A1**
(43) Date of publication of application: **26.10.1994**
(21) Application number: 93201163.8
(22) Date of filing: 21.04.1993
(51) Int. Cl.: C09K 7/02, C09K 7/00, E21B 21/06

(54) **Removing fines from a spent aqueous drilling fluid**

(71) Applicant: SHELL INTERNATIONALE RESEARCH MAATSCHAPPIJ B.V., NL-2596 HR Den Haag (NL)
(72) Inventor: Killie, Siv, NL-2288 GD Rijswijk (NL); Hoorn, Johannes Adriaan Aris, NL-2288 GD Rijswijk (NL)

(57) **Abstract**

Method of removing fines from a spent aqueous drilling fluid containing, a water-soluble polymer, a salting-out anion, fines and a slightly soluble calcium or magnesium compound comprising the steps of
(a) raising the pH of the aqueous drilling fluid to allow agglomeration of the fines and precipitation of the water-soluble polymer; and
(b) separating the agglomerates from the aqueous drilling fluid.

## Description

The present invention relates to removing fines from a spent aqueous drilling fluid which is being used in drilling a borehole in an underground formation to obtain a well in the formation. During drilling of a borehole in the formation drill cuttings accumulate in the aqueous drilling fluid. The larger particles can be removed by so-called shale shakers, and the smaller particles can be removed by hydrocyclones and decanting centrifuges. Other methods involve adding to the spent aqueous drilling fluid chemical flocculation agents to settle out the fines at surface, or diluting the spent aqueous drilling fluid with water to reduce the concentration of fines. See, for example, Development in Petroleum Science, 11, Drilling and Drilling Fluids, G.V. Chilingarian and P. Vorabutr, Elsevier, 1981, page 309-310.

A disadvantage of adding chemical flocculation agents is that a relatively large amount of flocculation agent is required, and a disadvantage of diluting the aqueous drilling fluid is that other drilling fluid components such as materials to increase density, organic polymers and mud-conditioning agents have to be replenished.

A further method to remove clay particles from spent aqueous drilling fluid comprises adding calcium chloride to an aqueous solution of colloid clay particles, see Composition and Properties of Oil Well Drilling Fluids, 4th Edition, G.R. Gray and H.C.H. Darley, page 164-167.

Applicant has found that this method cannot be applied in case the drilling fluid contains a viscosifier in the form of a water-soluble polymer, as this water-soluble polymer remains dissolved in the aqueous phase and, as a consequence, the fluid is too viscous to allow separation by means of centrifuging.

The aqueous drilling fluid for which the present invention has been developed also contains a salting-out anion. These salting-out anions decrease the temperature at which the water-soluble polymer starts to precipitate (see Lyotropic Numbers of Anions From Cloud Point Changes of Nonioninc Surfactants, H. Schott, Colloids and Surfaces, 11 (1984), pages 51-54). An example of a salting-out anion is the formate ion which also increases the transition temperature of a biopolymer, see European patent application publication No. 259 939.

It was found that to obtain flocculation the aqueous drilling fluid should contain a slightly soluble calcium or magnesium compound, wherein the expression "slightly soluble" is used to indicate that the solubility of the compound in water at room temperature is less than 1 g/l (gram per litre). Examples of the slightly soluble calcium or magnesium compounds are carbonates such as chalk (calcium carbonate) and dolomite (a carbonate of magnesium and magnesium), sulphates such as gypsum (calcium sulphate), oxides such as lime (calcium oxide), and hydroxides. The slightly soluble compound can already be present in the drilling fluid, or it can be added to it before treatment starts.

It is an object of the present invention to provide a method of removing fines from a spent aqueous drilling fluid containing a water-soluble polymer, a salting-out anion, fines and a slightly soluble calcium or magnesium compound, wherein only a small amount of chemicals is required to obtain precipitation of the fines.

To this end the method of removing fines from a spent aqueous drilling fluid containing a water-soluble polymer, a salting-out anion, fines and a slightly soluble calcium or magnesium compound according to the present invention comprises the steps of
(a) raising the pH of the aqueous drilling fluid to allow agglomeration of the fines and precipitation of the water-soluble polymer; and
(b) separating the agglomerates from the aqueous drilling fluid.

In the specification and in the claims the word "fines" is used to refer to particles having a size up to 100 micrometer.

Applicant has found that when the dissolved slightly soluble compound is precipitated by raising the pH the fines and the remainder of the compound serve as nuclei for the agglomerates that form from the precipitate. The particle size of the agglomerates is substantially larger than the particle size of the fines. Thus agglomeration is effected by changing the concentration of ions which are already in solution, and the treated fluid does not contain residual flocculation agent. Normally the pH of a drilling fluid is between 8 and 10.5.

To increase the concentration of dissolved slightly soluble calcium or magnesium compound, prior to raising the pH, the pH of the aqueous drilling fluid is suitably lowered.

Lowering the pH of the aqueous drilling fluid can be done by adding a suitable acid, for example hydrogen chloride; and raising the pH can be done by adding a suitable base, for example potassium hydroxide.

The water-soluble polymer can be any polymer that is used in an aqueous drilling fluid to increase the viscosity, for example a biopolymer such as xanthan polymer, a succinoglycan polysaccharide, a scleroglycan polysaccharide or a cellulose polymer, or a synthetic polymer, such as an acrylate polymer.

It will be understood that the aqueous drilling fluid can already contain the slightly soluble calcium or magnesium compound in a sufficient amount. Alternatively, in the absence of such a compound in the aqueous drilling fluid or when the concentration is too low, the compound is added prior to the treatment to obtain an aqueous drilling fluid containing in the range of from 10 to 100 kg compound per m³ of drilling fluid.

Suitably the pH of the aqueous drilling fluid is lowered to in the range of from 5 to 6. And the pH of the aqueous drilling fluid is suitably raised to in the range of from 11 to 13.

The invention will now be described in more detail with reference to the below example.

An amount of 28.5 g (gram) of drilled solids (particle size up to 100 micrometer) was added to 1 l of drilling fluid including 460 g sodium formate, 160 g potassium chloride, 2.14 g xanthan polymer, 5.71 g AMPS-acrylate polymer (which is a copolymer of 2-acrylamido-2-methyl propane sulphonic acid ex Lubrizol), 5.71 g polyanionic cellulose polymer, 85.6 g chalk and 1.43 g sodium carbonate. The pH of the drilling fluid was 9.5. The plastic viscosity of the drilling fluid was 34 cP, the yield point was 23 Pa, and the apparent viscosity (at a shear rate of 1 020 1/s) was 47 cP.

To this drilling fluid was slowly added while stirring 5 ml (millilitre) of an aqueous solution containing 360 g/l of hydrogen chloride. The pH of the drilling fluid decreased to 5.5, and part of the chalk dissolved.

Subsequently 20 ml of an aqueous solution of 10 mol/l of potassium hydroxide was quickly added and the pH increased to 12. The plastic viscosity of the drilling fluid after changing the pH was 22 cP, the yield point was 3 Pa, and the apparent viscosity (at a shear rate of 1 020 1/s) was 26 cP.

Large agglomerates were formed, and the viscosity of the spent aqueous drilling fluid had been sufficiently reduced to allow easy removing the large particles by centrifuging. The centrate contained less than 5% of the original solids and its apparent viscosity (at a shear rate of 1 020 1/s) was 9 cP, which is sufficiently low to facilitate filtering using Cellite (Trade Mark) as a filter aid.

It will be understood that without changing the pH the drilling fluid is so viscous that the fines cannot be easily removed by centrifuging; after centrifuging under the same conditions the centrate was more turbid.

## Claims

1. Method of removing fines from a spent aqueous drilling fluid containing, a water-soluble polymer, a salting-out anion, fines and a slightly soluble calcium or magnesium compound comprising the steps of
(a) raising the pH of the aqueous drilling fluid to allow agglomeration of the fines and precipitation of the water-soluble polymer; and
(b) separating the agglomerates from the aqueous drilling fluid.

2. Method according to claim 1, wherein prior to raising the pH the slightly soluble compound is added to the spent aqueous drilling fluid to obtain an aqueous drilling fluid containing in the range of from 10 to 100 kg slightly soluble compound per m³ of drilling fluid.

3. Method according to claim 1, wherein prior to raising the pH, the pH of the aqueous drilling fluid is lowered to dissolve at least part of the slightly soluble calcium or magnesium compound.

4. Method according to claim 3, wherein prior to lowering the pH the slightly soluble compound is added to the spent aqueous drilling fluid to obtain an aqueous drilling fluid containing in the range of from 10 to 100 kg slightly soluble compound per m³ of drilling fluid.

5. Method according to claim 3 or 4, wherein the pH of the aqueous drilling fluid is lowered to in the range of from 5 to 6.

6. Method according to anyone of the claims 1-5, wherein the pH of the aqueous drilling fluid is raised to in the range of from 11 to 13.

7. Method according to anyone of the claims 1-6, wherein the salting-out anion is a formate ion.
